# EUROPÄISCHE PATENTSCHRIFT

(11) **EP 3 441 652 B1**
(45) Veröffentlichungstag und Bekanntmachung des Hinweises auf die Patenterteilung: **01.04.2020**
(21) Anmeldenummer: 18186501.5
(22) Anmeldetag: 31.07.2018
(51) Int. Cl.: F16K 37/00, F16K 7/14

(54) **ABSPERRKÖRPER FÜR EIN FLUIDVENTIL UND VERFAHREN ZUR HERSTELLUNG EINES ABSPERRKÖRPERS**
SHUT-OFF ELEMENT FOR A FLUID VALVE AND METHOD FOR PRODUCING A SHUT-OFF ELEMENT
CORPS OBTURATEUR POUR UNE SOUPAPE DE FLUIDE ET PROCÉDÉ DE FABRICATION D'UN CORPS OBTURATEUR

(30) Priorität: 07.08.2017 DE 102017117910
(43) Veröffentlichungstag der Anmeldung: 13.02.2019
(73) Patentinhaber: GEMÜ Gebr. Müller Apparatebau GmbH & Co. Kommanditgesellschaft, 74653 Ingelfingen (DE)
(72) Erfinder: Mayer, Jürgen, 74523 Schwäbisch Hall (DE); Frankenbach, Klaus, 74670 Forchtenberg-Schleierhof (DE)
(74) Vertreter: DREISS Patentanwälte PartG mbB

(56) Entgegenhaltungen:
- EP-A1- 3 070 381
- CN-A- 101 636 608
- DE-A1-102012 001 652
- DE-A1-102013 214 304
- DE-A1-102015 210 208
- US-A1- 2008 202 606
- US-B2- 7 363 824

## Beschreibung

Die Erfindung betrifft einen Absperrkörper für ein Fluidventil sowie ein Verfahren zur Herstellung eines Absperrkörpers.

Absperrkörper für Fluidventile können eine Vielzahl von Formen aufweisen und sind an den speziellen Einsatzzweck bzw. Ventiltyp angepasst. Insbesondere sind sogenannte Plug-Absperrkörper oder Plug-Diaphragm bekannt. Es wird beispielhaft auf die DE 10 2013 215 294 A1 verwiesen.

Des Weiteren sind elektronische Datenträger insbesondere RFID-Transponder bekannt, deren Kennung kontaktlos mittels eines Lesegeräts ausgelesen werden kann. Aus der WO 2015/010810 A1 ist beispielsweise eine Membran bekannt, bei der ein elektronischer Datenträger in einer von der Membran abragenden Lasche angeordnet ist.

Mithin könnte man die Aufgabe der Erfindung darin sehen, einen elektronischen Datenträger zu einem Absperrkörper festzulegen.

Die der Erfindung zugrunde liegende Aufgabe wird durch einen Absperrkörper nach dem Anspruch 1 und ein Verfahren zur Herstellung eines Absperrkörpers nach einem nebengeordneten Anspruch gelöst.

Gemäß einem ersten Aspekt wird ein Absperrkörper für ein Fluidventil vorgeschlagen. Der Absperrkörper umfasst: ein in den Absperrkörper eingebrachtes Sackloch, wobei das Sackloch von einer dorsalen Seite ausgehend in einen ventralen Abschnitt, dessen Oberfläche im Betrieb des Fluidventils einem Prozessfluid ausgesetzt ist, hineinführt; einen elektronischen Datenträger, welcher in einem Bodenbereich des Sacklochs angeordnet ist; und eine in das Sackloch eingebrachte Vergussmasse, welche den elektronischen Datenträger zu dem Absperrkörper festlegt.

Vorteilhaft wird der elektronische Datenträger von einer rückwärtigen Seite d. h. der dorsalen Seite des Absperrkörpers eingebracht, womit im Normalbetrieb ein Kontakt mit Prozessfluid ausgeschlossen ist. Zum Auslesen des elektronischen Datenträgers wird ein Lesegerät an das distale Ende des ventralen Abschnitts herangeführt und eine auf dem elektronischen Datenträger abgespeicherte Kennung wird von dem Lesegerät ausgelesen.

Ein weiterer Vorteil des vorgeschlagenen Absperrkörpers ist, dass sich der elektronischen Datenträger an einem Ort befindet, der von einem Befestigungsbereich des Absperrkörpers unterschiedlich ist. Diese Entkopplung ist insbesondere bei einem rotationssymmetrisch ausgebildeten Absperrkörper vorteilhaft, welcher in einer beliebigen Drehposition in dem Fluidventil anordenbar ist.

Eine vorteilhafte Ausführungsform zeichnet sich dadurch aus, dass das Sackloch in dem Bodenbereich einen Freistich umfasst, wobei die Vergussmasse formschlüssig in den Freistich eingreift, und wobei die Vergussmasse und der elektronische Datenträger formschlüssig zueinander festgelegt sind.

Hierdurch wird der elektronische Datenträger auf einfache Art und Weise zu dem Absperrkörper festgelegt. Insbesondere wenn das Material (beispielsweise PTFE) in dem Bodenbereich ein geringes Haftvermögen aufweist, ist die formschlüssige Festlegung vorteilhaft.

Eine vorteilhafte Ausführungsform zeichnet sich dadurch aus, dass das Sackloch ein Innengewinde umfasst, welches zur Anordnung einer Ventilspindel zwischen einer Öffnung des Sacklochs und dem Bodenbereich des Sacklochs angeordnet ist. Im Betrieb des Fluidventils ist die Ventilspindel in das Innengewinde eingedreht und bewegt mithilfe eines Antriebs den ventralen Abschnitt des Absperrkörpers. Gleichzeitig ist der elektronische Datenträger mit der Vergussmasse im Sackloch vor Beschädigung geschützt.

Eine vorteilhafte Ausführungsform zeichnet sich dadurch aus, dass der Bodenbereich des Sacklochs eine zur Längsachse des Sacklochs lotrechte Bodenfläche umfasst. Vorteilhaft vereinfacht sich hierdurch die Anordnung und Anlage des elektronischen Datenträgers. Gleichzeitig wird das Auslesen des elektronischen Datenträgers durch den ventralen Abschnitt hindurch verbessert.

Eine vorteilhafte Ausführungsform zeichnet sich dadurch aus, dass der elektronische Datenträger scheibenförmig ausgebildet ist, wobei eine Scheibenfläche des elektronischen Datenträgers in einer etwa parallelen Ebene zu der Bodenfläche ausgerichtet ist. Hierdurch wird eine platzsparende Anordnung des elektronischen Datenträgers ermöglicht.
Eine vorteilhafte Ausführungsform zeichnet sich dadurch aus, dass der elektronische Datenträger auf der Bodenfläche aufliegt. Hiermit verbessert sich das drahtlose Auslesen des elektronischen Datenträgers durch den ventralen Abschnitt hindurch.

Eine vorteilhafte Ausführungsform zeichnet sich dadurch aus, dass ein Sitzabschnitt des ventralen Abschnitts radial außerhalb von dem Sackloch oder außerhalb von einer gedachten Verlängerung des Sackloches angeordnet ist. Da der Boden des Sackloches möglichst nah an eine Außenfläche des ventralen Abschnitts herangeführt ist, sorgt die radial nach außen vorgesehene Anordnung des Sitzabschnitts dafür, dass eine mechanische Stabilität des Absperrkörpers gewährleistet wird.

Eine vorteilhafte Ausführungsform zeichnet sich dadurch aus, dass die Materialstärke des Absperrkörpers zwischen dem Bodenbereich des Sackloches und einer distalen Außenfläche einen Wert von 3 mm, insbesondere einen Wert von 2 mm, nicht überschreitet. Durch die vorgeschlagene Materialstärke wird ein sicheres Auslesen des elektronischen Datenträgers gewährleistet.

Eine vorteilhafte Ausführungsform zeichnet sich dadurch aus, dass als elektronischer Datenträger ein RFID-Chip (RFID = radio frequency identification) vorhanden ist. Eine vorteilhafte Ausführungsform zeichnet sich dadurch aus, dass der Absperrkörper im Wesentlichen rotationssymmetrisch aufgebaut ist.

Ein zweiter Aspekt betrifft ein Verfahren zum Herstellen eines Absperrkörpers für ein Fluidventil. Das Verfahren umfasst: Einbringen eines Sackloches in den Absperrkörper, wobei das Sackloch von einer dorsalen Seite ausgehend in einen ventralen Abschnitt hineinführt; Anordnen eines elektronischen Datenträgers in einem Bodenbereich des Sacklochs; und Einbringen einer Vergussmasse in das Sackloch, wobei die Vergussmasse den elektronischen Datenträger zu dem Absperrkörper festlegt.

Weitere Merkmale und Vorteile der Erfindung finden sich ferner in der nachfolgenden Beschreibung von Ausführungsbeispielen der der Zeichnung. In der Zeichnung zeigen:
Figuren 1 und 2 einen Absperrkörper in einem schematischen Schnitt; und
Figur 3 ein schematisches Ablaufdiagramm.

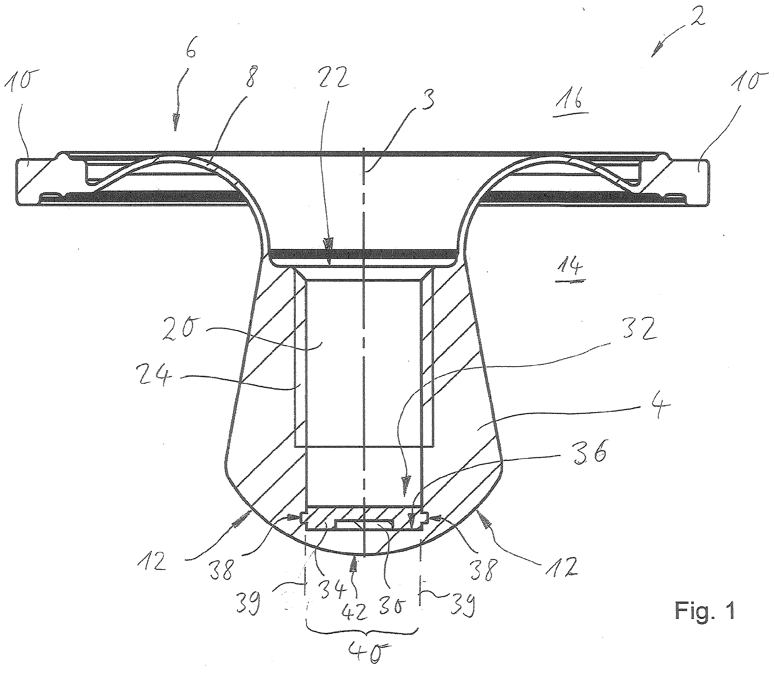

Figur 1 zeigt einen Absperrkörper 2 in einem schematischen Schnitt. Der Absperrkörper 2 ist im Wesentlichen rotationssymmetrisch zu einer Rotationsachse 3 ausgebildet. Der Absperrkörper 2 ist auch als Plug-Diaphragm bezeichenbar. Selbstverständlich lässt sich die nachfolgende Beschreibung auch auf anders ausgebildete Absperrkörper wie beispielsweise Membrane oder Ventilstößel übertragen. Ein ventraler Abschnitt 4 des Absperrkörpers 2 ist zur Anordnung in Richtung eines fluidführenden Bereichs 14 eines Fluidventils vorgesehen. Ein dorsaler Abschnitt 6 ist zu Anordnung in Richtung eines nicht fluidführenden Bereichs 16 des Fluidventils vorgesehen.

Der dorsale Abschnitt 6 umfasst einen Membranabschnitt 8, welcher radial nach außen in einen Befestigungsabschnitt 10 übergeht. Der Befestigungsabschnitt 10 ist zu einer Verklemmung beispielsweise zwischen einem Ventilkörper und einem Zwischenstück des Fluidventils vorgesehen. Radial nach innen schließt sich der ventrale Abschnitt 4 an den Membranabschnitt 8 an. In distaler Richtung weist der ventrale Abschnitt 4 eine Durchmesserzunahme auf und geht anschließend in einen kuppelförmigen Bereich über, welcher einen Sitzbereich 12 umfasst. Der Sitzbereich 12 dient zur Anlage an einem Ventilsitz.

Von dem Bereich 16 ausgehend, d.h., von der dorsalen Seite des Absperrkörpers 2 ausgehend, erstreckt sich ein Sackloch 20 entlang der Rotationsachse 3 in den ventralen Abschnitt 4 hinein. Ausgehend von einer Öffnung 22 des Sackloches 20 ist ein Innengewinde 24 in die Wandung des Sackloches eingefräst. Ein zu dem Innengewinde 24 korrespondierendes Außengewinde einer nicht gezeigten Ventilspindel des Fluidventils ist in das Innengewinde 24 eindrehbar. Die Ventilspindel, welche von einem Antrieb des Fluidventils angetrieben wird, bewegt den ventralen Abschnitt 4 axial zum Öffnen bzw. Schließen eines Fluidkanals. Der Membranabschnitt 8 erlaubt die vorgenannte Bewegung und sorgt für eine Trennung der Bereiche 14 und 16.

Ein elektronischer Datenträger 30 ist in einem Bodenbereich 32 des Sackloches 20 angeordnet und mit einer in das Sackloch eingebrachten Vergussmasse 34 zu dem Absperrkörper 2 festgelegt. Der elektronische Datenträger 30 ist ein RFID-Chip (RFID = Radio frequency identification) und ist auch als Transponder bezeichenbar. Auf dem elektronischen Datenträger 30 ist eine für den Absperrkörper 2 individuelle Kennung abgespeichert, die mittels eines in die Nähe des elektronischen Datenträgers 30 gebrachten Lesegeräts ausgelesen wird. Mithilfe dieser individuellen Kennung ist es dann möglich, den Absperrkörper 2 bereits während der Produktion und in einer Anlage beim Kunden/Anwender nachzuverfolgen.

Der elektronische Datenträger 30 ist beispielsweise scheibenförmig ausgebildet und kann in der Draufsicht beispielsweise eine Rechteckform oder eine Kreisform aufweisen. Eine Scheibenfläche des elektronischen Datenträgers 30 ist in etwa parallel zu einer Bodenfläche 36 des Sacklochs 20 angeordnet. Die Bodenfläche 36 ist eine Ebene, welche lotrecht zur Rotationsachse 3 des Sacklochs 20 verläuft. Im vorliegenden Beispiel liegt der elektronische Datenträger 30 flächig auf der Bodenfläche 36 auf und ist in dorsaler Richtung komplett von der Vergussmasse 34 umgeben. Die Vergussmasse 34 greift, wenn sie ausgehärtet ist, in einen Freistich 38 des Sackloches 20 ein, umgibt zumindest abschnittsweise den elektronischen Datenträger 30 und legt damit den elektronischen Datenträger 30 gegenüber dem Absperrkörper 2 formschlüssig fest. Dieses Prinzip des Formschlusses ist insbesondere bei einer Ausbildung des ventralen Abschnitts 4 aus Polytetrafluorethylen, PTFE, vorteilhaft, da Polytetrafluorethylen eine reduzierte Oberflächenspannung aufweist.

Die Vergussmasse 34 umfasst beispielsweise Epoxidharz, welches nach der Anordnung des elektronischen Datenträgers 30 in das Sackloch 20 eindosiert wird. Die eindosierte Vergussmasse 34 wird anschließend während einer Aushärtungsdauer von mindestens 10 Minuten, insbesondere mindestens 15 Minuten in einem Ofen bei einer Aushärtungstemperatur oberhalb von 100 °C, insbesondere oberhalb von 130 °C, ausgehärtet. In einer weiteren Ausführungsform wird die Vergussmasse bei 150° eine Stunde Ofen ausgehärtet. Damit ist der elektronische Datenträger 30 mittels der Vergussmasse 34 in dem Sackloch 20 festgelegt. Die Vergussmasse 34 ist bevorzugt nicht elektrisch leitfähig und nicht magnetisierbar, wodurch eine Drahtloskommunikation mit dem elektronischen Datenträger 30 nicht gestört wird.

Eine gedachte Verlängerung 39 des Sackloches 20, welche von der Bodenfläche 36 ausgeht, liegt radial innerhalb eines Sitzbereichs 12. Durch die konstruktive Entkopplung der beiden Bereiche wird einer Verformung oder Beschädigung in einem Mittenbereich 40 des Absperrkörpers 2 vorgebeugt. Die Materialstärke des Absperrkörpers 2 zwischen der Bodenfläche 36 des Sackloches 20 und einer distalen Außenfläche 42 des Mittenbereichs 40 liegt in einem Bereich zwischen 3 mm und 0,5 mm, insbesondere in einem Bereich von 2 mm und 1 mm, wodurch das Auslesen des elektronischen Datenträgers 30 durch den Mittenbereich 40 hindurch verbessert wird.

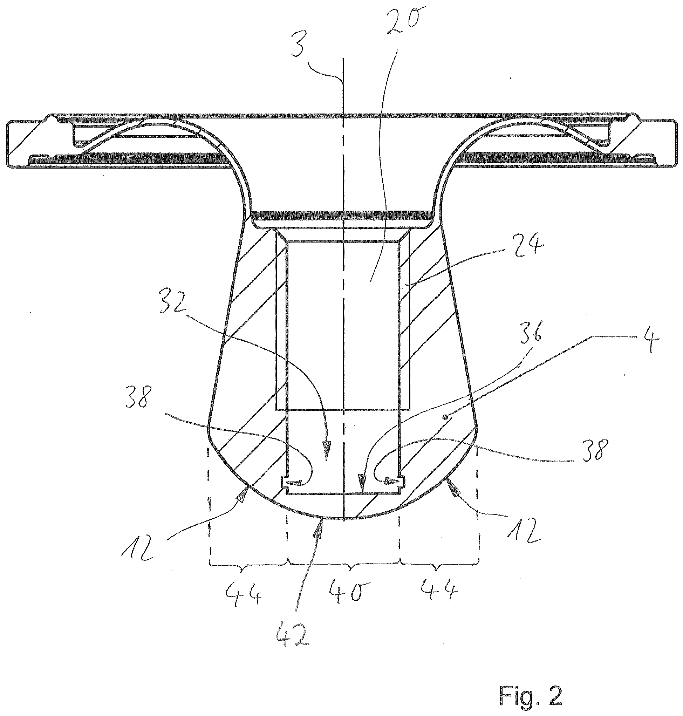

Figur 2 zeigt einen schematischen Schnitt durch den Absperrkörper 2, wobei der elektronische Datenträger 30 und die Vergussmasse 34 nicht gezeigt sind. Radial außerhalb des Mittenbereichs 40 schließt sich ein den Mittenbereich 40 umschließender Lateralbereich 44 an. Der Bodenbereich 32 umfasst die Bodenfläche 36 und den Freistich 38.

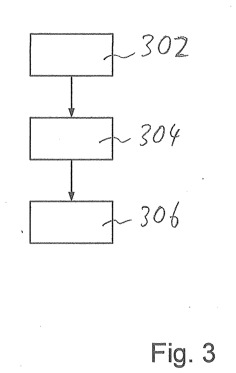

Figur 3 zeigt ein schematisches Ablaufdiagramm zur Herstellung des Absperrkörpers 2 aus Figur 1. In einem ersten Schritt 302 wird das Sackloch in den Absperrkörper eingebracht. Der Schritt 302 umfasst beispielsweise das Bohren des Sacklochs und das anschließende Herstellen der ebenen Bodenfläche 36. In einem Schritt 304 wird der elektronische Datenträger in dem Bodenbereich des Sacklochs angeordnet. Beispielsweise wird der elektronische Datenträger bevorzugt zentral auf die Bodenfläche 36 aufgelegt. In einem Schritt 306 wird die Vergussmasse in das Sackloch und insbesondere in den Bodenbereich des Sackloches eingebracht. Der Schritt 306 umfasst auch das Aushärten der Vergussmasse in dem Sackloch. Insbesondere fließt die Vergussmasse in den Freistich ein, umgibt gleichzeitig den elektronischen Datenträger und legt nach dem Aushärten den elektronischen Datenträger formschlüssig in dem Sackloch und damit zu dem Absperrkörper fest.

## Patentansprüche

1. Ein Absperrkörper (2) für ein Fluidventil, der Absperrkörper (2) umfassend:
- ein in den Absperrkörper (2) eingebrachtes Sackloch (20), wobei das Sackloch (20) von einer dorsalen Seite ausgehend in einen ventralen Abschnitt (4) hineinführt;
**dadurch gekennzeichnet, dass**
- ein elektronischer Datenträger (30) in einem Bodenbereich des Sacklochs (20) angeordnet ist; und
- eine in das Sackloch (20) eingebrachte Vergussmasse (34) den elektronischen Datenträger (30) zu dem Absperrkörper (2) festlegt.

2. Der Absperrkörper (2) nach dem Anspruch 1, wobei das Sackloch (20) in dem Bodenbereich einen Freistich umfasst, wobei die Vergussmasse (34) formschlüssig in den Freistich eingreift, und wobei die Vergussmasse (34) und der elektronische Datenträger (30) formschlüssig zueinander festgelegt sind.

3. Der Absperrkörper (2) nach dem Anspruch 1 oder 2, wobei das Sackloch (20) ein Innengewinde, welches zur Anordnung einer Ventilspindel zwischen einer Öffnung des Sacklochs (20) und dem Bodenbereich des Sacklochs (20) angeordnet ist, umfasst.

4. Der Absperrkörper (2) nach einem der vorstehenden Ansprüche, wobei der Bodenbereich des Sacklochs (20) eine zur Längsachse des Sacklochs (20) lotrechte Bodenfläche umfasst.

5. Der Absperrkörper (2) nach dem Anspruch 4, wobei der elektronische Datenträger (30) scheibenförmig ausgebildet ist, und wobei eine Scheibenfläche des elektronischen Datenträgers (30) in einer etwa parallelen Ebene zu der Bodenfläche ausgerichtet ist.

6. Der Absperrkörper (2) nach dem Anspruch 4 oder 5, wobei der elektronische Datenträger (30) auf der Bodenfläche aufliegt.

7. Der Absperrkörper (2) nach einem der vorstehenden Ansprüche, wobei ein Sitzabschnitt des ventralen Abschnitts (4) radial außerhalb von dem Sackloch (20) oder außerhalb von einer gedachten Verlängerung des Sackloches (20) angeordnet ist.

8. Der Absperrkörper (2) nach einem der vorstehenden Ansprüche, wobei die Materialstärke des Absperrkörpers (2) zwischen dem Bodenbereich des Sackloches (20) und einer distalen Außenfläche einen Wert von 3 mm, insbesondere einen Wert von 2 mm, nicht überschreitet.

9. Der Absperrkörper (2) nach einem der vorstehenden Ansprüche, wobei als elektronischer Datenträger (30) ein RFID-Chip (RFID = radio frequency identification) vorhanden ist.

10. Der Absperrkörper (2) nach einem der vorstehenden Ansprüche, wobei der Absperrkörper (2) im Wesentlichen rotationssymmetrisch aufgebaut ist.

11. Ein Verfahren zur Herstellung eines Absperrkörpers (2) für ein Fluidventil, das Verfahren umfassend:
- Einbringen eines Sackloches (20) in den Absperrkörper (2), wobei das Sackloch (20) von einer dorsalen Seite ausgehend in einen ventralen Abschnitt (4) hineinführt;
- Anordnen eines elektronischen Datenträgers (30) in einem Bodenbereich des Sacklochs (20); und
- Einbringen einer Vergussmasse (34) in das Sackloch (20), wobei die Vergussmasse (34) den elektronischen Datenträger (30) zu dem Absperrkörper (2) festlegt.

12. Das Verfahren nach dem Anspruch 11, welches zur Herstellung des Absperrkörpers (2) nach einem der Ansprüche 1 bis 10 ausgebildet ist.

## Claims

1. A closure body (2) for a fluid valve, the closure body (2) comprising:
- a blind hole (20) bored into the closure body (2), wherein the blind hole (20) extends from a dorsal side and leads into a ventral section (4);
**characterized in that**
- an electronic data carrier (30) is arranged in the bottom area of the blind hole (20); and
- a sealing compound (34) inserted into the blind hole (20) fixes the electronic data carrier (30) on the closure body (2).

2. The closure body (2) as claimed in claim 1, wherein the blind hole (20) comprises an undercut in the bottom area, wherein the sealing compound (34) engages the undercut in a positive fit and wherein the sealing compound (34) and the electronic data carrier (30) are fixed relative to each other in a positive fit.

3. The closure body (2) as claimed in claim 1 or 2, wherein the blind hole (20) comprises an internal threat which is arranged between an opening of the blind hole (20) and the bottom area of the blind hole (20) for arrangement of a valve spindle.

4. The closure body (2) as claimed in one of the preceding claims, wherein the bottom area of the blind hole (20) comprises a bottom surface which is perpendicular to the longitudinal axis of the blind hole (20).

5. The closure body (2) as claimed in claim 4, wherein the electronic data carrier (30) is disk-shaped and wherein a disk surface of the electronic data carrier (30) is oriented in a plane which is substantially parallel to the bottom surface.

6. The closure body (2) as claimed in claim 4 or 5, wherein the electronic data carrier (30) lies on the bottom surface.

7. The closure body (2) as claimed in one of the preceding claims, wherein a seat portion of the ventral section (4) is arranged radially outside of the of the blind hole (20) or outside of an imaginary extension of the blind hole (20).

8. The closure body (2) as claimed in one of the preceding claims, wherein the thickness of the material of the closure body (2) between the bottom area of the blind hole (20) and a distal external surface does not exceed a value of 3 mm, in particular a value of 2 mm.

9. The closure body (2) as claimed in one of the preceding claims, wherein a RFID chip (RFID = radiofrequency identification) is provided as an electronic data carrier (30) .

10. The closure body (2) as claimed in one of the preceding claims, wherein the closure body (2) is formed substantially rotationally symmetrical.

11. A method for producing a closure body (2) for a fluid valve, the method comprising:
- boring a blind hole (20) into the closure body (2), which blind hole extends from a dorsal side and leads into a ventral section (4);
- arranging in electronic data carrier (30) in a bottom area of the blind hole (20); and
- inserting a sealing compound (34) into the blind hole (20), wherein the sealing compound (34) fixes the electronic data carrier (30) on the closure body (2).

12. The method as claimed in claim 11, which is arranged for producing the closure body (2) as claimed in one of claims 1 to 10.

## Revendications

1. Corps obturateur (2) pour une soupape de fluide, ledit corps obturateur (2) comprenant:
- un trou borgne (20) pratiqué dans le corps obturateur (2), ledit trou borgne (20) menant à partir d'un côté dorsal dans une section ventrale (4);
**caractérisé par le fait que**
- un support électronique de données (30) est disposé dans une zone de fond du trou borgne (20); et
- une masse de remplissage (34) introduit dans le trou borgne (20) immobilise le support électronique de données (30) par rapport au corps obturateur (2).

2. Corps obturateur (2) selon la revendication 1, dans lequel le trou borgne (20) comprend un dégagement dans la zone de fond, la masse de remplissage (34) se prend à engagement positif dans le dégagement, et dans lequel la masse de remplissage (34) et le support électronique de données (30) sont immobilisés l'un par rapport à l'autre à engagement positif.

3. Corps obturateur (2) selon la revendication 1 ou 2, dans lequel le trou borgne (20) comprend un filetage intérieur qui est agencé pour la disposition d'une tige de soupape entre une ouverture du trou borgne (20) et la zone de fond du trou borgne (20).

4. Corps obturateur (2) selon l'une quelconque des revendications précédentes, dans lequel la zone de fond du trou borgne (20) comprend une surface de fond perpendiculaire à l'axe longitudinal du trou borgne (20).

5. Corps obturateur (2) selon la revendication 4, dans lequel le support électronique de données (30) est réalisé en forme de disque, et dans lequel une surface de disque du support électronique de données (30) est orientée dans un plan à peu près parallèle à la surface de fond.

6. Corps obturateur (2) selon la revendication 4 ou 5, dans lequel le support électronique de données (30) repose sur la surface de fond.

7. Corps obturateur (2) selon l'une quelconque des revendications précédentes, dans lequel une section de siège de la section ventrale (4) est disposée radialement à l'extérieur du trou borgne (20) ou à l'extérieur d'un rallongement imaginaire du trou borgne (20).

8. Corps obturateur (2) selon l'une quelconque des revendications précédentes, dans lequel l'épaisseur de matière du corps obturateur (2) entre la zone de fond du trou borgne (20) et une surface extérieure distale ne dépasse pas une valeur de 3 mm, en particulier une valeur de 2 mm.

9. Corps obturateur (2) selon l'une quelconque des revendications précédentes, dans lequel une puce RFID (RFID = identification par radiofréquence) est présente en tant que support électronique de données (30).

10. Corps obturateur (2) selon l'une quelconque des revendications précédentes, dans lequel le corps obturateur (2) est conçu pour l'essentiel à symétrie de révolution.

11. Procédé de fabrication d'un corps obturateur (2) pour une soupape de fluide, le procédé comprenant:
- pratiquer un trou borgne (20) dans le corps obturateur (2), ledit trou borgne (20) menant à partir d'un côté dorsal dans une section ventrale (4);
- disposer un support électronique de données (30) dans une zone de fond du trou borgne (20); et
- introduire une masse de remplissage (34) dans le trou borgne (20), dans lequel ladite masse de remplissage (34) immobilise le support électronique de données (30) par rapport au corps obturateur (2).

12. Procédé selon la revendication 11, qui est conçu pour fabriquer le corps obturateur (2) selon l'une quelconque des revendications 1 à 10.
